# FASCICULE DE BREVET EUROPEEN

(11) **EP 1 953 440 B1**
(45) Date de publication et mention de la délivrance du brevet: **14.10.2009**
(21) Numéro de dépôt: 08356021.9
(22) Date de dépôt: 04.02.2008
(51) Int. Cl.: F16L 29/04, F16L 37/33

(54) **Partie femelle de raccord comprenant un organe d'actionnement de soupapes et raccord comprenant une telle partie femelle**
Kontaktteil eines Anschlusses, der ein Betätigungsorgan von Ventilen umfasst, und mit einem solchen Kontaktteil versehener Anschluss
Female part of a joint comprising a valve-activating element and joint comprising such a female part

(30) Priorité: 05.02.2007 FR 0700800
(43) Date de publication de la demande: 06.08.2008
(73) Titulaire: STAUBLI FAVERGES, 74210 FAVERGES (FR)
(72) Inventeur: Tiberghien, Alain Christophe, 74320 Sevrier (FR); Durieux, Christophe, 73200 Gilly sur Isere (FR)
(74) Mandataire: Myon, Gérard Jean-Pierre

(56) Documents cités:
- EP-A- 1 271 073
- FR-A- 1 360 204
- GB-A- 2 409 502

## Description

La présente invention concerne un raccord, notamment pour conduites sous-marines, ainsi qu'une partie de raccord femelle destinée à être accouplée à une partie mâle complémentaire pour former un tel raccord

Généralement, un raccord est formé d'une partie mâle et d'une partie femelle qui peuvent comprendre respectivement un élément de raccord mâle et un élément de raccord femelle. Lorsqu'il a lieu sous la mer, l'emboîtement de l'élément mâle dans l'élément femelle peut résulter de ce qu'un dispositif mécanique déplace l'une des parties de raccord vers l'autre partie de raccord. Dans ce cas, il peut arriver que l'élément mâle et l'élément femelle ne soient pas correctement alignés l'un par rapport à l'autre lors de l'opération d'emboîtement.

FR-A-2 864 604 décrit un raccord dont les parties de raccord mâle et femelle présentent de longues zones de guidage afin de compenser un éventuel défaut d'alignement lors de leur accouplement. Ainsi, pour faciliter le guidage de la partie de raccord mâle dans la partie de raccord femelle, leurs surfaces en regard sont complémentaires. Pour permettre l'écoulement du fluide entre les conduites à raccorder, l'élément femelle et l'élément mâle comportent chacun un passage dans lequel peut transiter le fluide. Lorsque les parties du raccord sont assemblées, les extrémités distales de chacun de ces passages se trouvent donc en regard l'une de l'autre. Par convention, les termes « proximal » et « distal » sont définis par référence à l'extrémité de la partie de raccord susceptible d'être connectée à une conduite de fluide. Le terme « proximal » désigne donc un objet proche de la conduite, tandis que le terme « distal » désigne un objet qui en est plus éloigné.

Les extrémités distales présentent chacune une section rétrécie sur laquelle porte une soupape destinée à obturer le passage correspondant. Ainsi, les éléments mâle et femelle comportent chacun une soupape mobile en translation entre une position d'obturation, où elle se trouve en appui sur la section rétrécie du passage, et une position d'ouverture, où elle se trouve en retrait à l'intérieur de l'élément de raccord correspondant. De plus, les éléments mâle et femelle comprennent chacun un organe élastique permettant de ramener la soupape correspondante dans sa position d'obturation du passage.

Comme le montre FR-A-2 864 604, la forme relativement étroite et allongée de la surface externe de l'élément mâle détermine la géométrie de sa soupape. Ainsi, cette soupape présente la forme d'une tige allongée et relativement mince. La soupape équipant l'élément femelle présente également la forme d'une tige allongée et mince. Ces deux tiges sont agencées coaxialement et elles sont aptes à se repousser mutuellement, en translation dans leurs passages respectifs, après avoir été mises en contact par l'accouplement des éléments mâle et femelle.

Dans le cadre d'une application sous-marine, le raccord est soumis à une pression extérieure qui dépend de la profondeur à laquelle il est installé. Cette profondeur peut être très importante, comme dans le cas des plateformes off-shore. Pour maintenir l'étanchéité de chaque élément de raccord avant leur assemblage, les organes élastiques doivent alors exercer des efforts importants sur les soupapes de manière à les maintenir en position d'obturation. Dans le cas illustré par FR-A-2 864 604, chaque organe élastique de rappel est constitué par un ressort hélicoïdal dont l'encombrement est tel qu'il doit être agencé au sein de la partie proximale du passage derrière la soupape.

Chaque ressort exerce donc un effort de compression sur la partie arrière de la tige de la soupape qu'il maintient en position. Par conséquent, la tige de chaque soupape présente un risque de déformation par flambage, qui peut conduire à la défaillance du raccord. L'une des conduites peut en outre contenir un fluide sous haute pression, de l'ordre de 1200 bars, tandis que l'autre peut contenir un liquide se trouvant à une pression comparativement faible, comme la pression piézométrique régnant à la profondeur où se trouve le raccord. Dans ce cas, l'effort nécessaire pour ouvrir la soupape qui obture la conduite sous haute pression doit être très important. Chaque soupape est alors soumise à des contraintes axiales de compression considérables, qui sont susceptibles d'entraîner son flambage.

Le risque de flambage est en outre aggravé par un défaut d'alignement entre les parties mâle et femelle qui peut survenir lors de leur assemblage. Or, un tel défaut d'alignement est relativement fréquent lorsque l'accouplement est réalisé en milieu sous-marin par un automate. Le risque de flambage résulte également de la limitation du diamètre des tiges de soupape dans le but d'obtenir le débit de fluide souhaité dans les passages.

Par ailleurs, FR-A-1 360 204 décrit un élément femelle destiné à recevoir un élément mâle de raccord. L'élément femelle comporte un passage de fluide logeant un ressort et une bille d'obturation, un alésage pour recevoir l'élément mâle et un organe d'actionnement de la bille apte à coulisser dans une chambre de guidage de l'élément femelle. L'organe d'actionnement comprend deux tiges axiales, de façon à ouvrir simultanément les deux tronçons de la conduite. L'élément femelle présente un filetage de façon à être vissé dans le corps d'une partie femelle. Une telle liaison vissée nécessite d'aligner parfaitement l'élément mâle et l'élément femelle lors de leur connexion, sans quoi l'organe d'actionnement présente des risques de flambage et/ou de flexion, en particulier pour des pressions de fluide élevées.

L'invention a plus particulièrement pour objectif de remédier à ces inconvénients et notamment de proposer un élément ou une partie de raccord femelle ou un raccord, équipé d'un dispositif d'actionnement des soupapes présentant un risque de flambage réduit des tiges de soupape.

A cet effet, l'invention a pour objet une partie femelle de raccord destinée à recevoir une partie mâle de raccord et comprenant un élément femelle ainsi qu'un corps délimitant une zone de réception de l'élément femelle, la partie femelle étant munie de moyens d'articulation de l'élément femelle dans la zone, l'élément femelle comportant :
- un passage présentant une section rétrécie, le passage logeant une soupape mobile en translation et un organe élastique de rappel de la soupape en position d'obturation de la section rétrécie ;
- un alésage cylindrique destiné à recevoir un élément de raccord mâle équipé d'une soupape.

La partie femelle comprend en outre:
- une chambre s'étendant axialement entre le passage et l'alésage cylindrique et définissant une surface cylindrique de guidage ; et
- un organe d'actionnement des soupapes des éléments de raccord mâle et femelle apte à coulisser dans la chambre et composé d'un support s'étendant radialement depuis un axe de la surface cylindrique de guidage jusqu'à la surface cylindrique de guidage, l'organe d'actionnement comprenant en outre deux tiges s'étendant selon l'axe de la chambre de part et d'autre du support, l'une de ces tiges étant apte à pénétrer dans le passage, de façon à ouvrir la soupape correspondante.
   De plus, les moyens d'articulation comprennent :

- un alésage taraudé réalisé dans la partie distale de la zone de réception, l'élément femelle étant associé à un écrou apte à être vissé dans ou dévissé hors de l'alésage taraudé, l'écrou étant mobile en rotation autour de l'élément de raccord entre des butées axiales distale et proximale solidaires de l'élément, et
- une bague vissée sur l'élément, la bague comportant une surface distale apte à s'articuler avec une surface proximale de l'écrou.

En d'autres termes, la partie femelle, munie de moyens d'articulation, loge un organe intermédiaire guidé en translation et apte à actionner les soupapes respectives des éléments mâle et femelle d'un raccord. De plus, cet organe intermédiaire présente une géométrie propre à réduire les risques de flambage des composants de l'élément de raccord. De tels moyens d'articulation contribuent à réduire les risques de flambage et de flexion, car ils facilitent l'alignement mutuel des éléments mâle et femelle lors de leur connexion.

Selon d'autres caractéristiques avantageuses de cet élément de raccord femelle :
- l'alésage cylindrique, la chambre et le passage sont co-axiaux ;
- la surface cylindrique de guidage est formée par une douille globalement cylindrique vissée dans un trou taraudé réalisé dans l'élément de raccord femelle ;
- la douille comporte, du côté de l'alésage cylindrique, une butée axiale pour l'organe d'actionnement lorsqu'il se déplace en direction de l'alésage cylindrique ;
- l'alésage cylindrique est réalisé dans une pièce vissée dans l'élément femelle et dont la partie proximale forme une surface annulaire axiale, et l'élément femelle comprend un joint monté dans un logement défini par la surface annulaire axiale et par une paroi du trou taraudé et destiné à porter sur une surface cylindrique externe de l'élément mâle ;
- le support est composé d'au moins deux pattes radiales réparties uniformément autour d'un axe selon lequel s'étendent les tiges ;
- la surface cylindrique de guidage possède un diamètre supérieur ou égal à 42 mm et les tiges présentent chacune un diamètre inférieur ou égal à 14mm;
- la surface radiale externe occupée par les pattes radiales est inférieure ou égale à 20% de la surface cylindrique de guidage ;
- chaque patte radiale possède une longueur axiale de l'ordre de 6 mm et une épaisseur, considérée dans un plan perpendiculaire à l'axe selon lequel s'étendent les tiges, comprise entre 1,5 mm et 3 mm;
- les tiges sont de même longueur ;
- la soupape comprend une bille et les extrémités libres des tiges présentent la forme de calottes sphériques concaves dont l'une a un diamètre correspondant à celui de la bille ;
- la soupape comprend un doigt s'étendant selon l'axe du passage dans lequel cette soupape est logée ;
- les moyens d'articulation comprennent un organe annulaire élastique de rappel radial de l'élément femelle vers une position d'articulation médiane, l'organe annulaire étant monté entre la partie distale de l'écrou et la bague ;
- la surface distale de la bague et/ou la surface proximale de l'écrou présente(nt) sensiblement une forme en tronçon de sphère.

Par ailleurs, la présente invention a également pour objet un raccord pour la jonction rapide et amovible de deux conduites, ce raccord comprenant une partie mâle équipée d'une soupape et une partie femelle telle que précédemment exposée.

Selon une première variante, chaque soupape peut comprendre une bille d'obturation et une pièce intercalaire agencée entre la bille et un organe élastique de rappel de la soupape en position d'obturation.

Selon une deuxième variante, le raccord comprend une partie mâle équipée d'une soupape ainsi qu'une partie femelle dont la soupape comprend un doigt s'étendant selon l'axe du passage dans lequel cette soupape est logée.

D'autre part, l'invention porte sur l'utilisation d'un raccord tel que mentionné ci-dessus pour la jonction sous-marine, rapide et amovible de deux conduites susceptibles de canaliser un fluide sous haute pression, les parties mâle et femelle étant destinées à être actionnées par un automate.

L'invention sera bien comprise à la lecture de la description qui va suivre, donnée uniquement à titre d'exemple et faite en se référant aux dessins annexés, dans lesquels :
- la figure 1 est une représentation schématique en coupe d'un raccord comprenant une partie de raccord femelle conforme à l'invention et une partie de raccord mâle de forme complémentaire, les deux parties étant disjointes ;
- la figure 2 est une coupe analogue à la figure 1 vue à plus petite échelle et illustrant une position intermédiaire d'emboîtement de la partie de raccord mâle dans la partie de raccord femelle ;
- la figure 3 est une coupe analogue à la figure 1 vue à plus petite échelle et illustrant la position d'emboîtement finale, dans laquelle les soupapes des deux parties de raccord sont ouvertes ;
- la figure 4 est une vue en perspective d'un organe d'actionnement des soupapes qui appartient à la partie de raccord femelle illustrée sur les figures 1 à 3 ;
- la figure 5 est une vue de face de l'organe d'actionnement de la figure 4.

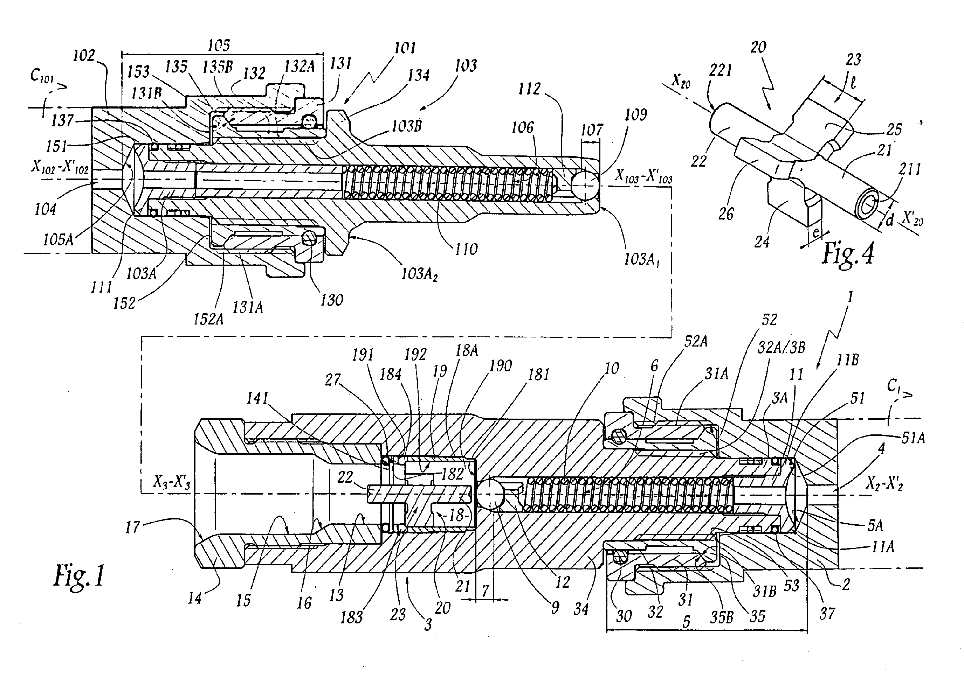

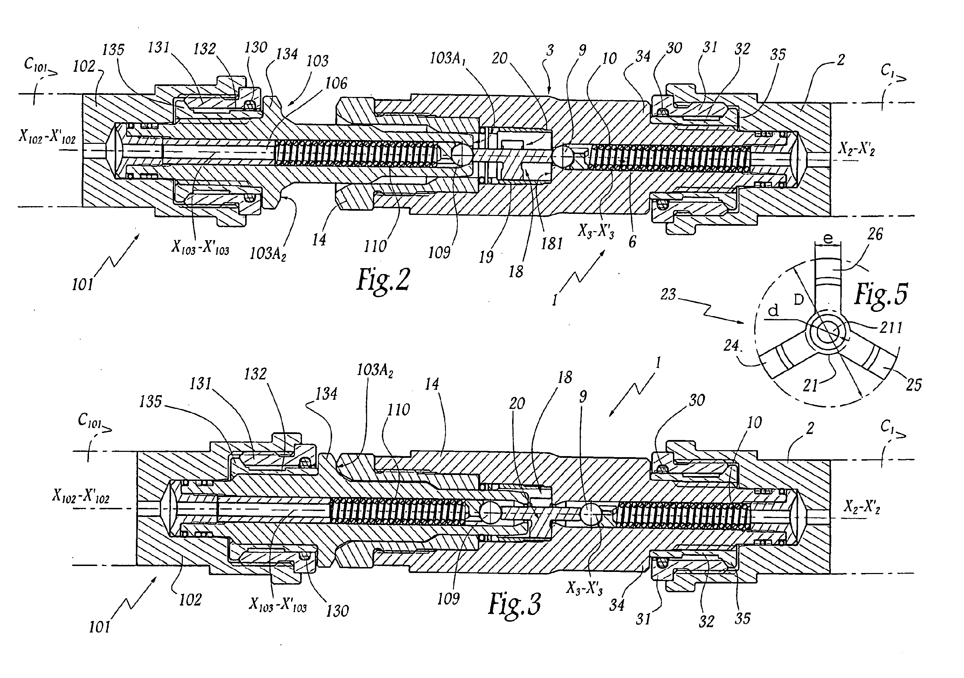

Sur la figure 1 est représenté un raccord pour la jonction rapide et amovible de deux conduites C₁ et C₁₀₁, destiné à être utilisé sous la mer et qui comporte une partie femelle 1 et une partie mâle 101 disjointes avant leur assemblage représenté sur les figures 2 et 3. Ce raccord est donc un raccord « sous-marin » ou « pour conduites sous-marines ».

La partie 1 du raccord comporte un corps 2 s'étendant le long d'un axe X₂-X'₂ et un élément de raccord femelle 3 s'étendant le long d'un axe X₃-X'₃ formant axe de symétrie pour l'élément 3 et pour la partie 1. De même, la partie mâle 101 du raccord comporte un corps 102 d'axe X₁₀₂-X'₁₀₂ et un élément mâle 103 s'étendant le long d'un axe X₁₀₃-X'₁₀₃. Le corps 2 délimite un canal 4 débouchant d'un côté dans une zone de réception 5 de l'élément 3 et relié de l'autre côté à une conduite de fluide C₁ représentée en traits mixtes.

L'élément femelle 3 est emboîté dans la zone de réception 5 par des moyens d'articulation destinés à faciliter l'alignement mutuel des éléments mâle 103 et femelle 3. Ces moyens d'articulation peuvent donc autoriser un débattement radial de l'élément 3 par rapport au corps 2, comme le montre la figure 1. Dans la pratique, les corps 2 et 102 sont solidarisés à des plaques distinctes qui sont rapprochées pour effectuer l'accouplement. L'articulation des éléments mâle 103 et femelle 3 dans leurs corps respectifs permet d'absorber les défauts d'alignement entre les axes X₂-X'₂ et X₁₀₂-X'_{102.}

L'élément femelle 3 est traversé par un passage 6 de forme cylindrique à base circulaire qui s'étend le long de l'axe X₃-X'₃. Le passage 6 présente une section tronconique rétrécie 7 au niveau de son extrémité distale, c'est-à-dire la plus éloignée de la conduite de fluide C₁.

Le passage 6 est pourvu d'une soupape comprenant notamment une bille sphérique 9 dont le diamètre est supérieur à la plus petite dimension de la section rétrécie 7, mais inférieur au diamètre du passage 6. Ainsi, la bille 9 est libre de se mouvoir en translation dans le passage 6 qu'elle peut obturer de manière étanche lorsqu'elle est en appui sur la section rétrécie 7 qui forme un siège pour la bille 9. Par ailleurs, le passage 6 loge un ressort hélicoïdal 10 permettant de ramener la bille 9 dans la position d'obturation de la section rétrécie 7 et s'étendant longitudinalement le long de l'axe de symétrie du passage cylindrique 6. Pour utiliser au mieux le volume du passage 6, le diamètre extérieur du ressort 10 peut être choisi sensiblement égal au diamètre du passage 6.

La zone 5 de réception de l'élément 3 est composée de deux alésages 51 et 52 co-axiaux. Les alésages 51 et 52 sont en forme de cylindres à bases circulaires s'étendant le long d'un axe X₂-X'₂ du corps 2. L'alésage proximal 51, appartenant à la région proximale de la zone 5, présente un diamètre inférieur à celui de l'alésage distal 52, si bien que les deux alésages sont reliés par une surface annulaire axiale 53. La partie proximale de l'élément 3 comporte un embout 3A de forme cylindrique à base circulaire et d'axe X₃-X'₃ qui définit l'axe de révolution de l'élément 3. Le diamètre de l'embout 3A et le diamètre de l'alésage proximal 51 sont déterminés de façon à permettre leur emboîtement.

La portion proximale, c'est-à-dire la plus proche de la conduite de fluide C_{1,} de l'embout 3A est équipée d'un butoir 11 vissé dans l'élément 3 par l'intermédiaire d'un filetage prévu dans le passage 6. Le centre du butoir 11 est percé d'un orifice traversant de manière à mettre en communication le canal 4 et le passage 6. Le butoir 11 comprend en outre une tête annulaire 11B qui s'étend axialement depuis l'extrémité annulaire de l'élément mâle 3 en direction du canal 4. Les dimensions de la tête 11B lui permettent également de s'insérer dans l'alésage proximal 51.

La portion proximale de l'embout cylindrique 3A présente un épaulement qui délimite avec la tête 11B une gorge annulaire dans laquelle est monté un joint d'étanchéité rigide 37. Le joint d'étanchéité 37, qui peut être métallique, est ajusté de manière à porter fortement sur la surface radiale 51A de l'alésage 51. Le joint d'étanchéité 37 se trouve ainsi disposé dans la gorge annulaire entre l'élément 3 et le corps 2 lorsque ces derniers sont accouplés et peut ainsi assurer une liaison étanche entre eux, y compris lorsque le fluide-se trouve sous haute pression.

La zone 5 présente un taraudage 52A réalisé dans la partie distale, c'est-à-dire du côté ouvert, de l'alésage distal 52, de façon à coopérer avec un écrou 31 associé à l'élément 3. L'écrou 31 présente un filetage 31A réalisé sur sa surface radiale externe et dans sa partie proximale, afin d'être vissé dans le taraudage 52A. Par ailleurs, l'écrou 31 est relié à l'élément 3 par l'intermédiaire d'une bague 32 solidarisée à cet élément. La bague 32 présente une forme globalement cylindrique à base circulaire dont l'axe est confondu avec l'axe X₃-X'₃. Sa surface cylindrique interne présente un taraudage 32A de manière à coopérer avec un filetage complémentaire 3B prévu sur l'élément 3.

L'écrou 31 est agencé sensiblement co-axialement à la bague 32 et sa surface radiale interne est globalement complémentaire à la surface radiale externe de la bague 32. Les dimensions de l'écrou 31 et de la bague 32 sont sélectionnées de manière à ménager un jeu fonctionnel entre ces deux pièces selon une direction radiale. L'écrou 31 est ainsi libre de tourner autour de la bague 32. L'écrou 31 est donc mobile en rotation autour de l'élément 3.

L'extrémité proximale de la bague 32 forme une collerette 35. La collerette 35 présente un diamètre externe inférieur au diamètre de l'alésage distal 52. La face distale 35B de la collerette 35 présente sensiblement une forme de tronçon de sphère convergente vers l'axe X₃-X'₃ lorsqu'elle se rapproche de la bille 9, de façon à former une butée axiale proximale pour l'écrou 31 lors de son déplacement en direction de la conduite C₁. Pour cela, la partie proximale de l'écrou 31 présente une surface 31B en forme de tronçon de sphère sensiblement complémentaire de celle de la face distale 35B de la collerette 35. L'écrou 31 et la bague 32 réalisent une liaison articulée autorisant un débattement angulaire ou radial. L'élément 3 peut ainsi tourner par rapport à un axe radial passant par l'axe X₂-X'₂ du corps 2. Un organe annulaire élastique 30 logé entre la partie distale de l'écrou 31 et la bague 32 permet cependant de rappeler la bague 32 et l'élément 3 dans une position d'articulation médiane. La surface radiale externe de l'élément 3 présente un épaulement 34 constituant une surface de butée distale pour l'écrou 31.

De la même manière, la tête 11B du butoir 11 peut présenter une surface radiale externe tronconique 11 A, de façon à s'articuler sur le fond tronconique 5A et à faciliter ainsi l'emboîtement de l'embout 3A dans l'alésage proximal 51.

Outre la bille 9, la soupape de la partie 1 comprend une pièce intercalaire 12 agencée entre la bille 9 et le ressort 10. La pièce intercalaire 12 est ici composée de trois pattes réunies au niveau de l'axe X₃-X'₃ du passage 6 et s'étendant radialement depuis cet axe X₃-X'₃. Dans un plan perpendiculaire à l'axe X₃-X'₃, les trois pattes sont réparties uniformément, à 120° environ, autour de cet axe X₃-X'₃. La pièce 12 a pour fonction de transmettre à la bille 9 de manière optimale l'effort de rappel élastique exercé par le ressort 10. Ce dernier travaille en compression entre le butoir 11 et la soupape composée de la pièce 12 et de la bille 9.

L'élément de raccord femelle 3 présente, dans sa partie distale, un alésage cylindrique 13 destiné à recevoir l'élément mâle 103 de la partie 101. Pour des raisons pratiques exposées par la suite, l'alésage cylindrique 13 est réalisé dans une pièce de révolution 14 dont l'axe est confondu avec l'axe X₃-X'₃. La pièce de révolution 14 est vissée dans l'élément femelle 3 au niveau de sa partie distale. La paroi radiale interne de cette pièce de révolution 14 présente une construction étagée s'évasant en direction de son embouchure par laquelle l'élément 103 peut être engagé vers l'élément 3. Pour cela, cette paroi radiale interne est constituée d'un deuxième alésage cylindrique 15 dont le diamètre est supérieur à celui de l'alésage 13. Une surface est ici qualifiée de « radiale » ou « axiale » par référence à une direction normale à cette surface. Les alésages 13 et 15 sont raccordés par une portion tronconique 16. De plus, l'embouchure de la pièce 14 est formée par une deuxième portion tronconique 17 dont le petit diamètre correspond au diamètre du deuxième alésage 15. Cette construction étagée sert à guider l'élément mâle 103 vers l'élément femelle 3, ce qui facilite l'accouplement des parties 1 et 101 du raccord.

La partie 101 a une constitution générale semblable à celle de la partie 1. Une référence utilisée ci-après pour désigner un élément de la partie de raccord 101 semblable ou équivalent à un ensemble référencé de la partie 1 est obtenue en augmentant de 100 la référence repérant cet élément de la partie 1. De cette manière sont obtenues notamment les références du corps 102 de la partie 101, de l'élément mâle 103, du canal 104, de la portion d'extrémité 105, du passage traversant 106 et de sa section rétrécie 107, de la bille 109, du ressort 110, du butoir 111 et de la pièce intercalaire 112. La bille 109 et la pièce 112 forment ensemble la soupape de la partie 101. Le corps 102 est connecté à une conduite C₁₀₁. Les pièces 103, 109, 110, 111, 132 sont centrées sur un axe X₁₀₃-X'₁₀₃ formant axe de symétrie pour l'élément 103 et destiné à être aligné avec l'axe X₃-X'₃ lors de l'accouplement des parties mâle 101 et femelle 1.

Entre l'alésage cylindrique 13 et le passage traversant 6, l'élément femelle 3 comporte un trou 18 cylindrique à base circulaire et comportant un taraudage 18A. Une douille 19 est vissée dans le taraudage 18A. La cavité définie par la douille 19 forme une chambre 190 cylindrique, qui peut être à base circulaire ou non ou encore à base prismatique. L'axe de la chambre 190 est ici confondu avec l'axe X₃-X'₃ de la pièce de révolution 14, donc de l'alésage cylindrique 13. En d'autres termes, l'alésage cylindrique 13, la chambre 190 et le passage 6 sont co-axiaux.

Au sein de la chambre 190, l'élément de raccord femelle 3 loge un organe 20 d'actionnement des billes 9 et 109. Pour actionner les billes 9 et 109, cet organe 20 comprend deux tiges 21 et 22 qui s'étendent, entre l'alésage cylindrique 13 et le passage 6, selon un axe X₂₀-X'₂₀ qui, lorsque l'organe 20 est monté dans la chambre 190, est aligné avec l'axe de la chambre 190, lequel est confondu avec l'axe X₃-X'₃. Comme le montrent les figures, la tige proximale 21 est destinée à actionner la bille 9 de l'élément 3, tandis que la tige distale 22 est destinée à actionner la bille 109 de l'élément 103.

L'organe 20 comprend en outre un support 23, à partir duquel s'étendent axialement les tiges 21 et 22 et qui s'étend radialement jusqu'à une surface cylindrique de guidage 192 formée par la paroi radiale interne de la chambre 190, c'est-à-dire ici de la douille 19. Le support 23 occupe donc la partie médiane de l'organe 20 et il s'appuie sur la surface 192.

Dans l'exemple illustré par les figures, les tiges proximale 21 et distale 22 sont co-axiales et de même longueur. Elles pourraient présenter des dimensions et positions différentes selon les caractéristiques respectives des sections rétrécies 7 et 107. Il est toutefois avantageux que ces tiges aient la même longueur, car le risque de flambage de ces tiges sous la pression exercée par les billes 9 et 109 est alors minimisé et équi-réparti entre elles.

Les tiges 21 et 22 de l'organe 20 possèdent un diamètre d d'environ 13,5 mm inférieur respectivement aux plus petits diamètres des sections 7 et 107. Ainsi, les tiges 21 et 22 peuvent pénétrer respectivement dans les passages 6 et 106 traversant les éléments 3 et 103, comme le montre la figure 3. Pour faciliter leur coopération avec les billes 9 et 109, les tiges 21 et 22 présentent respectivement des extrémités libres 211 et 221 en forme de calottes sphériques concaves, c'est-à-dire dont le rayon de courbure s'étend en dehors de la tige correspondante. Avantageusement, les diamètres de chaque calotte sphérique 211 et 221 correspondent respectivement aux diamètres de chaque bille 9 et 109. Une telle géométrie permet de transmettre aux billes 9 et 109 des efforts importants tout en minimisant les pressions de contact qu'elles subissent.

Dans le mode de réalisation illustré, le support 23 est composé de trois pattes 24, 25 et 26 s'étendant radialement depuis l'axe X₂₀-X'₂₀ de l'organe 20 et réparties uniformément autour de cet axe X₂₀-X'₂₀. Ces trois pattes radiales 24-26 sont donc deux à deux espacées d'un angle de 120° environ dans un plan perpendiculaire à l'axe X₂₀-X'₂₀. En l'occurrence, les trois pattes 24, 25 et 26 présentent les mêmes dimensions et se trouvent chacune en appui sur la surface 192.

Certaines dimensions de l'organe d'actionnement sont également illustrées par la figure 5. Ainsi, les pattes 24 à 26 ont une épaisseur e de 2 mm, comprise entre 1,5 mm et 3 mm. Les pattes 24 à 26 possèdent en outre une longueur axiale de 6 mm. De plus, les pattes 24 à 26 s'inscrivent dans un cylindre d'au moins 42 mm de diamètre, qui représente le diamètre de la surface cylindrique 192.

Compte tenu de leurs dimensions, les pattes 24 à 26 occupent seulement 8 % de la surface cylindrique 192 soit moins de 20%. Par conséquent, le débit de fluide dans la chambre cylindrique 190 peut être important, tandis que les frottements sont réduits.

La douille 19 est réalisée en un matériau, tel que du bronze, présentant un faible coefficient de frottement par rapport aux pattes 24 à 26, qui peuvent être réalisées en acier. On qualifie de faible un coefficient de frottement inférieur à 0,2. Ceci facilite le coulissement de l'extrémité des pattes radiales 24 à 26 sur la surface 192. Ainsi, l'organe 20 est rendu aisément mobile en translation dans la chambre 190 le long de l'axe X₃-X'₃.

La partie distale de la douille 19 comporte un épaulement 191 qui constitue une butée dans la direction axiale pour l'organe 20, lorsque celui-ci se déplace en direction de l'alésage 13 et de l'élément mâle 103. En effet, les pattes 24 à 26 ont une longueur axiale telle qu'elles viennent en appui contre l'épaulement 191 lorsque l'organe 20 est déplacé vers l'alésage 13. Lorsqu'il se déplace dans l'autre sens, c'est-à-dire vers le passage 6 et la conduite C_{1,} l'organe 20 vient buter sur la paroi axiale proximale 181 du trou 18. Par ailleurs, la partie distale de la douille 19 présente deux trous 183 et 184 radiaux, internes et symétriques par rapport à l'axe X₃-X'₃ de façon à recevoir un outil de vissage et de dévissage de la douille 19 dans le trou 18.

La surface annulaire proximale 141 de la pièce 14 définit avec la paroi radiale 182 du trou 18 un logement pour un joint d'étanchéité 27. Le joint 27 a pour fonction d'assurer l'étanchéité entre les éléments 3 et 103 lorsqu'ils sont accouplés, comme le montre la figure 3. Le joint 27 vient alors en appui autour d'une surface cylindrique distale et externe de l'élément 103. Le joint 27 peut être constitué d'un joint métallique.

Les figures 1 à 3 montrent la partie femelle 1 et la partie mâle 101 dans trois positions illustrant trois étapes successives de leur accouplement. Sur la figure 1, les parties 1 et 101 sont disjointes. Grâce à son guidage par la pièce 14, l'élément 103 est engagé d'abord partiellement, comme le montre la figure 2, puis complètement, comme le montre la figure 3, dans l'élément 3. Dans la position intermédiaire illustrée par la figure 2, l'organe 20 entre en contact avec les billes 9 et 109. Ces dernières se trouvent encore en appui respectivement sur les sections 7 et 107, si bien que les passages 6 et 106 ne sont pas encore mis en communication.

Ensuite, lorsque l'on continue de déplacer l'élément 103 vers l'élément 3 selon une translation d'axe X₂-X'₂, l'organe 20 subit, au travers de ses tiges 21 et 22, un effort de compression globalement axial. L'une des billes 9 ou 109 quitte sa position d'obturation ouvrant ainsi le passage 6 ou 106 correspondant. En fait, c'est la bille qui obture le passage dans lequel règne la plus basse pression de fluide qui se déplace la première au sein de son passage 6 ou 106.

Si la pression de fluide régnant dans la conduite C₁ est inférieure à celle régnant dans la conduite C₁₀₁, la bille 9 quitte la section rétrécie 7 en premier, c'est-à-dire avant que la bille 109 quitte la section 107. L'organe 20 termine sa course en translation lorsque les pattes 24 à 26 du support 23 butent sur la paroi annulaire 181 de la chambre 190.

Après immobilisation de l'organe 20, la soupape de l'élément 103, constituée de la bille 109 et de la pièce 112, quitte sa position d'obturation, ouvrant ainsi le passage 106. A partir de cet instant, les passages 6 et 106 sont mis en communication et le fluide commence à s'écouler entre les conduites C₁₀₁ et C₁. Un déplacement supplémentaire de l'élément 103 résulte dans la compression élastique du ressort 110. La fin de course de l'élément 103 est atteinte peu avant ou lorsqu'une surface annulaire 103A₂ de l'élément 103 vient en butée contre la pièce 14. Dans cette position illustrée par la figure 3, le joint 27 réalise alors l'étanchéité entre les éléments 3 et 103. Les parties 1 et 101 peuvent alors être maintenues dans cette position d'accouplement par des moyens appropriés non représentés.

A l'inverse, si la pression de fluide régnant dans la conduite C₁ est supérieure à la pression de fluide régnant dans la conduite C_{101,} la bille 109 quitte son appui en premier jusqu'à ce que l'élément 103 bute, par l'intermédiaire d'une surface annulaire distale 103A₁, sur les pattes 24 à 26 du support 23, lequel se déplace alors en translation selon l'axe X₃-X'₃ faisant pénétrer la tige 21 dans le passage 6 et déplaçant en conséquence la bille 9 jusqu'à atteindre sa fin de course.

Selon un autre mode de fonctionnement, les billes 9 et 109 quittent leurs positions d'obturation respectives avant que les pattes 24 à 26 ne butent sur la surface 181 ou sur la surface 103A₁. En effet, en fonction des raideurs choisies pour les ressorts 10 et 110 et de la pression relative entre les conduites C₁ et C₁₀₁, les efforts de compression s'exerçant sur les billes 9 et 109 peuvent s'équilibrer et les billes 9 et 109 quitter leur appui simultanément.

L'invention permet de réduire considérablement les risques de flambage des pièces composant les soupapes et des pièces actionnant celles-ci, car elle dispense d'employer des tiges de soupape de grande longueur. Chaque tige de soupape peut ainsi être remplacée par une bille 9 ou 109 éventuellement en appui sur une pièce intercalaire 12 ou 112.

Quant à l'organe 20, il présente un risque de flambage faible, dans la mesure où les tiges 21 et 22 peuvent présenter une longueur réduite, juste suffisante pour actionner les soupapes. En effet, la charge maximale admissible en flambage est inversement proportionnelle au carré de la longueur libre d'une tige. De plus, le support médian 23 renforce la résistance de l'organe 20 aux contraintes que ce dernier subit lors de l'accouplement des parties mâle et femelle.

En outre, les moyens d'articulation limitent les risques de flambage, car ils contribuent au bon alignement des parties mâle et femelle entre elles lors de leur accouplement. La partie femelle 1 et le raccord qui l'incorpore présentent donc une résistance élevée au flambage, notamment par l'effet des moyens d'articulation.

Il n'est pas nécessaire de prévoir une butée derrière chaque soupape, contrairement au raccord décrit dans FR-A-2 864 604. Comme cela est exposé ci-dessus, c'est le support 23 qui arrête la course en translation de l'organe d'actionnement 20 et, partant, de chacune des soupapes. Les fonctions de butées axiales préalablement remplies par chaque soupape, au moyen d'une forme relativement complexe donc onéreuse, sont désormais remplies par l'organe d'actionnement 20 logé dans la chambre 190 qui le guide.

D'autres formes de réalisation sont possibles sans pour autant sortir du cadre de cette invention. On peut par exemple remplacer les billes 9 et 109 par des doigts courts s'étendant respectivement selon les axes des passages 6 et 106. Par ailleurs, on peut également placer un ressort hélicoïdal entre l'organe 20 et une partie fixe solidaire de l'élément 3, telle que la paroi annulaire axiale 181. Un tel ressort permettrait ainsi de renforcer la stabilité de l'organe 20 au cours de son mouvement de translation.

L'invention peut être adaptée à une partie de raccord femelle selon FR-A-2 864 604 pour faire application de l'invention décrite dans ce document. Cette partie de raccord est munie de moyens d'articulation de l'élément femelle dans la zone de réception correspondante.

## Revendications

1. Partie femelle (1) de raccord destinée à recevoir une partie mâle (101) de raccord et comprenant un élément femelle (3) ainsi qu'un corps (2) délimitant une zone (5) de réception de l'élément femelle (3), la partie femelle (1) étant munie de moyens d'articulation de l'élément femelle (3) dans la zone (5), l'élément femelle (3) comportant :
- un passage (6) présentant une section rétrécie (7), le passage (6) logeant une soupape (9, 12) mobile en translation et un organe élastique de rappel (10) de la soupape (9, 12) en position d'obturation de la section rétrécie (7) ;
- un alésage cylindrique (13) destiné à recevoir un élément de raccord mâle (103) équipé d'une soupape (109, 112) ; la partie femelle (1) comprenant en outre :
- une chambre (190) s'étendant axialement entre le passage (6) et l'alésage cylindrique (13) et définissant une surface cylindrique de guidage (192) ; et
- un organe d'actionnement (20) des soupapes (9, 12 ; 109, 112) des éléments de raccord mâle (103) et femelle (3) apte à coulisser dans la chambre (190) et composé d'un support (23) s'étendant radialement depuis un axe de la surface cylindrique de guidage (192) jusqu'à la surface cylindrique de guidage (192), l'organe d'actionnement (20) comprenant en outre deux tiges (21, 22) s'étendant selon l'axe (X₃-X'₃) de la chambre (190) de part et d'autre du support (23), l'une (21) de ces tiges étant apte à pénétrer dans le passage (6), de façon à ouvrir la soupape (9, 12) correspondante,
la partie femelle (1) étant **caractérisée en ce que** les moyens d'articulation comprennent :
- un alésage (52) taraudé (52A) réalisé dans la partie distale de la zone de réception (5), l'élément femelle (3) étant associé à un écrou (31) apte à être vissé dans ou dévissé hors de l'alésage (52) taraudé (52A), l'écrou (31) étant mobile en rotation autour de l'élément de raccord (3) entre des butées axiales distale (34) et proximale (35) solidaires de l'élément (3), et
- une bague (32) vissée (3B) sur l'élément (3), la bague (32) comportant une surface distale (35B) apte à s'articuler avec une surface proximale (31 B) de l'écrou (31).

2. Partie femelle (1) selon la revendication 1, **caractérisée en ce que** l'alésage cylindrique (13), la chambre (190) et le passage (6) sont co-axiaux.

3. Partie femelle (1) selon l'une des revendications précédentes, **caractérisée en ce que** la surface cylindrique de guidage (192) est formée par une douille (19) globalement cylindrique vissée dans un trou (18) taraudé (18A) réalisé dans l'élément de raccord femelle (3).

4. Partie femelle (1) selon la revendication 3, **caractérisée en ce que** la douille (19) comporte, du côté de l'alésage cylindrique (13), une butée axiale (191) pour l'organe d'actionnement (20) lorsqu'il se déplace en direction de l'alésage cylindrique (13).

5. Partie femelle (1) selon l'une des revendications précédentes, **caractérisée en ce que** l'alésage cylindrique (13) est réalisé dans une pièce (14) vissée dans l'élément femelle (3) et dont la partie proximale forme une surface annulaire axiale (141), et **en ce que** l'élément femelle (3) comprend un joint (27) monté dans un logement défini par la surface annulaire axiale (141) et par une paroi (182) du trou (18) taraudé (18A) et destiné à porter sur une surface cylindrique externe de l'élément mâle (103).

6. Partie femelle (1) selon l'une des revendications précédentes, **caractérisée en ce que** le support (23) est composé d'au moins deux pattes radiales (24-26) réparties uniformément autour d'un axe (X₂₀-X'₂₀) selon lequel s'étendent les tiges (21, 22).

7. Partie femelle (1), selon la revendication 6, **caractérisée en ce que** la surface cylindrique de guidage (192) possède un diamètre (D) supérieur ou égal à 42 mm et **en ce que** les tiges (21, 22) possèdent chacune un diamètre (d) inférieur ou égal à 14 mm.

8. Partie femelle (1) selon la revendication 7, **caractérisée en ce que** la surface radiale externe occupée par les pattes radiales (24-26) est inférieure ou égale à 20% de la surface cylindrique de guidage (192).

9. Partie femelle (1) selon la revendication 8, **caractérisée en ce que** chaque patte radiale (24-26) possède une longueur axiale (I) de l'ordre de 6 mm et une épaisseur (e), considérée dans un plan perpendiculaire à l'axe (X₂₀-X'₂₀) selon lequel s'étendent les tiges (21, 22), comprise entre 1,5 mm et 3 mm.

10. Partie femelle (1) selon l'une des revendications précédentes, **caractérisée en ce que** les tiges (21, 22) sont de même longueur.

11. Partie femelle (1) selon l'une des revendications précédentes, **caractérisée en ce que** la soupape (9, 12) comprend une bille (9, 109) et **en ce que** les extrémités libres (211, 221) des tiges (21, 22) présentent la forme de calottes sphériques concaves dont l'une a un diamètre correspondant à celui de la bille (9, 109).

12. Partie femelle selon l'une des revendications 1 à 10, **caractérisé en ce que** la soupape comprend un doigt s'étendant selon l'axe du passage dans lequel cette soupape est logée.

13. Partie femelle (1) selon l'une des revendications précédentes, **caractérisée en ce que** les moyens d'articulation comprennent un organe annulaire élastique de rappel (30) radial de l'élément femelle (3) vers une position d'articulation médiane (X₂-X'₂), l'organe annulaire (30) étant monté entre la partie distale de l'écrou (31) et la bague (32).

14. Partie femelle (1) selon l'une des revendications précédentes, **caractérisée en ce que** la surface distale (35B) de la bague (32) et/ou la surface proximale (31B) de l'écrou (31) présente(nt) sensiblement une forme en tronçon de sphère.

15. Raccord pour la jonction rapide et amovible de deux conduites (C₁, C₁₀₁), le raccord comprenant une partie mâle (101) équipée d'une soupape (109, 112) et étant **caractérisé en ce qu'**il comprend une partie femelle (1) selon l'une des revendications 1 à 11 ou 13 à 14.

16. Raccord selon la revendication 15, **caractérisé en ce que** chaque soupape (9, 12 ; 109, 112) comprend une bille d'obturation (9, 109) et une pièce intercalaire (12, 112) agencée entre la bille (9, 109) et un organe élastique (10, 110) de rappel de la soupape en position d'obturation.

17. Raccord pour la jonction rapide et amovible de deux conduites comprenant une partie mâle équipée d'une soupape et étant **caractérisé en ce qu'**il comprend une partie femelle selon la revendication 12.

18. Utilisation d'un raccord selon l'une des revendications 15 à 17 pour la jonction sous-marine, rapide et amovible de deux conduites (C₁, C₁₀₁) susceptibles de canaliser un fluide sous haute pression, les parties mâle (101) et femelle (1) étant destinées à être actionnées par un automate.

## Claims

1. Female part (1) of a joint intended to receive a male joint part (101) comprising a female element (3) as well as a body (2) delimiting an area (5) for receiving the female element (3), the female part (1) being fitted with means of articulation of the female element (3) in the area (5), the female element (3) comprising:
- a passage (6) with a narrow section (7), the passage housing a mobile valve (9, 12) in translation and an elastic element for returning (10) the valve (9, 12) into a position for blocking the narrow section (7);
- a cylindrical hole (13) intended to receive a male joint element (103) fitted with a valve (109, 112);
the female part also comprising:
- a chamber (190) extending axially between the passage (6) and the cylindrical hole (13) defining a cylindrical guide surface (192) and;
- an element for activating (20) the valves (9, 12; 109, 112) of the male joint (103) and female joint (3) elements, which is capable of sliding in the chamber (190) and is made up of a support (23) extending radially from an axis of the cylindrical guide surface (192) as far as the cylindrical guide surface (192), the activating element (20) also comprising two rods (21, 22) extending along the axis (X₃-X'₃) of the chamber (190) on either side of the support (23), one (21) of these rods being capable of penetrating into the passage (6) so as to open the relevant valve (9, 12),
the female part (1) being **characterised in that** the means of articulation comprise:
- a tapped (52A) hole (52) made in the distal part of the receiving area (5), the female element (3) being associated with a nut (31) capable of being screwed into or out of the tapped (52A) hole (52), the nut (31) being mobile in rotation around the joint element (3) between the distal (34) and proximal (35) axial stops, which are interlocked with the element (3), and
- a ring (32) screwed (3B) onto the element (3), the ring (32) comprising a distal surface (35B) capable of being articulated on a proximal surface (31 B) of the nut (31).

2. Female part (1) according to claim 1, **characterised in that** the cylindrical hole (13), the chamber (190) and the passage (6) are coaxial.

3. Female part (1) according to one of the previous claims, **characterised in that** the cylindrical guide surface (192) is formed by a more or less cylindrical sleeve (19), which is screwed into a tapped (18A) hole (18) made in the female joint element (3).

4. Female part (1) according to claim 3, **characterised in that** on the side of the cylindrical hole (13) the sleeve (19) comprises an axial stop (191) for the activating element (20), when it is moved in the direction of the cylindrical hole (13).

5. Female part (1) according to one of the previous claims, **characterised in that** the cylindrical hole (13) is made in a part (14), which is screwed into the female element (3), the proximal part of which forms an axial ring shaped surface (141), and **in that** the female element (3) comprises a joint (27) fitted into a housing defined by the axial ring shaped surface (141) and a wall (182) of the tapped (18A) hole (18) intended to bear on an external cylindrical surface of the male element (103).

6. Female part (1) according to one of the previous claims, **characterised in that** the support (23) is made up of at least two radial lugs (24-26) distributed uniformly around an axis (X₂₀-X'₂₀), along which the rods (21, 22) extend.

7. Female part (1) according to claim 6, **characterised in that** the cylindrical guide surface (192) has a diameter (D), which is more than or equal to 42 mm, and **in that** the rods (21, 22) each have a diameter (d), which is less than or equal to 14 mm.

8. Female part (1) according to claim 7, **characterised in that** the external radial surface occupied by the radial lugs (24-26) is less than or equal to 20% of the cylindrical guide surface (192).

9. Female part (1) according to claim 8, **characterised in that** each radial lug (24-26) has an axial length (I) of the order of 6 mm and a thickness (e) of between 1.5 mm and 3 mm, when considered in a plane perpendicular to the axis (X₂₀-X'₂₀), along which the rods (21, 22) extend.

10. Female part (1) according to one of the previous claims, **characterised in that** the rods (21, 22) are of the same length.

11. Female part (1) according to one of the previous claims, **characterised in that** the valve (9, 12) comprises a ball (9, 109) and **in that** the free ends (211, 221) of the rods (21, 22) have the shape of concave spherical domes, one of which has a diameter corresponding to that of the ball (9, 109).

12. Female part according to one of claims 1 to 10, **characterised in that** the valve comprises a finger extending along the axis of the passage, in which this valve is housed.

13. Female part (1) according to one of the previous claims, **characterised in that** the means of articulation comprise an elastic ring shaped element for radially returning (30) the female element (3) to a median articulation position (X₂-X'₂), the ring shaped element (30) being fitted between the distal part of the nut (31) and the ring (32).

14. Female part (1) according to one of the previous claims, **characterised in that** the distal surface (35B) of the ring (32) and/or the proximal surface (31 B) of the nut (31) has/have the shape of a more or less spherical section.

15. Joint for the quick and detachable connection of two conduits (C₁, C₁₀₁), the joint comprising a male part (101) fitted with a valve (109, 112) and being **characterised in that** it comprises a female part (1) according to one of claims 1 to 11 or 13 to 14.

16. Joint according to claim 15, **characterised in that** each valve (9, 12; 109, 112) comprises a ball for blocking (9, 109) and an interleaving part (12, 112) arranged between the ball (9, 109) and an elastic element (190, 110) for returning the valve into the blocking position.

17. Joint for the quick and detachable connection of two conduits comprising a male part fitted with a valve and being **characterised in that** it comprises a female part according to claim 12.

18. Use of a joint according to one of claims 15 to 17 for the quick, detachable and submarine connection of two conduits (C₁, C₁₀₁) able to channel a fluid under high pressure, the male part (101) and female part (1) being intended to be activated by an automatic device.

## Patentansprüche

1. Kupplungsbuchsenteil (1), das vorgesehen ist, ein Kupplungseinsteckteil (101) aufzunehmen und ein Aufnahmeelement (3) sowie einen Körper (2) umfasst, der eine Zone (5) zur Aufnahme des Aufnahmeelements (3) begrenzt, wobei das Buchsenteil (1) mit Mitteln zur Anlenkung des Aufnahmeelements (3) in der Zone (5) ausgerüstet ist,
wobei das Aufnahmeelement (3) umfasst:
- einen Durchgang (6), der einen verengten Querschnitt (7) aufweist, wobei der Durchgang (6) ein translatorisch mobiles Ventil (9, 12) und ein elastisches Element (10) zum Rückstellen des Ventils (9, 12) in eine Verschlussstellung des verengten Querschnitts (7) unterbringt;
- eine zylindrische Bohrung (13), die vorgesehen ist, ein Kupplungseinsteckelement (103) aufzunehmen, das mit einem Ventil (109, 112) ausgerüstet ist;
wobei das Buchsenteil (1) darüber hinaus umfasst:
- eine sich axial zwischen dem Durchgang (6) und der zylindrischen Bohrung (13) erstreckende Kammer (190), die eine zylindrische Führungsfläche (192) begrenzt; und
- ein Betätigungselement (20) der Ventile (9, 12; 109, 112) des Kupplungseinsteckelements (103) und -aufnahmeelements (3), das geeignet ist, in der Kammer (190) zu gleiten und das eine Stütze (23) aufweist, die sich radial von einer Achse der zylindrischen Führungsfläche (192) bis zur zylindrischen Führungsfläche (192) erstreckt, wobei das Betätigungselement (20) darüber hinaus zwei Schäfte (21, 22) umfasst, die sich gemäß der Achse (X₃-X'₃) der Kammer (190) beidseitig der Stütze (23) erstrecken, wobei einer (21) dieser Schäfte geeignet ist, in den Durchgang (6) derart einzugreifen, dass er das entsprechende Ventil (9, 12) öffnet,
wobei das Buchsenteil (1) **dadurch gekennzeichnet ist, dass** die Mittel zur Anlenkung umfassen:
- eine Gewindebohrung (52, 52A), die in dem distalen Bereich der Aufnahmezone (5) realisiert ist, wobei das Aufnahmeelement (3) einer Mutter (31) zugeordnet ist, die geeignet ist, in die Gewindebohrung (52, 52A) eingeschraubt oder aus dieser herausgeschraubt zu werden und drehbeweglich um das Kupplungselement (3) zwischen einem distalen (34) und einem proximalen (35) axialen Anschlag, die mit dem Element (3) verbunden sind, angeordnet ist und
- einen auf das Element (3) geschraubten (3B) Ring (32), wobei der Ring (32) eine distale Fläche (35B) umfasst, die geeignet ist, sich mit der proximalen Fläche (31B) der Mutter (31) gelenkig zu verbinden.

2. Buchsenteil (1) nach Anspruch 1, **dadurch gekennzeichnet, dass** die zylindrische Bohrung (13), die Kammer (190) und der Durchgang (6) koaxial sind.

3. Buchsenteil (1) nach einem der vorhergehenden Ansprüche, **dadurch gekennzeichnet, dass** die zylindrische Führungsfläche (192) von einer im Wesentlichen zylindrischen Hülse (19) gebildet wird, die in ein Gewindeloch (18, 18A) geschraubt ist, das in dem Aufnahmeelement (3) eingearbeitet ist.

4. Buchsenteil (1) nach Anspruch 3, **dadurch gekennzeichnet, dass** die Hülse (19) an der Seite der zylindrischen Bohrung (13) einen axialen Anschlag (191) für das Betätigungselement (20) umfasst, wenn es sich in Richtung der zylindrischen Bohrung (13) verschiebt.

5. Buchsenteil (1) nach einem der vorhergehenden Ansprüche, **dadurch gekennzeichnet, dass** die zylindrische Bohrung (13) in einem Teil (14) realisiert ist, das in das Aufnahmeelement (3) geschraubt ist und dessen proximaler Bereich eine axiale Ringfläche (141) bildet, und dass das Aufnahmeelement (3) eine Dichtung (27) aufweist, die in einer Aufnahme montiert ist, die durch die axiale Ringfläche (141) und durch eine Wand (182) des Gewindelochs (18, 18A) begrenzt ist und die vorgesehen ist, sich zu einer äußeren zylindrischen Fläche des Einsteckelements (103) zu richten.

6. Buchsenteil (1) nach einem der vorhergehenden Ansprüche, **dadurch gekennzeichnet, dass** die Stütze (23) aus mindestens zwei radialen Ansatzstücken (24 - 26) gebildet wird, die gleichmäßig um eine Achse (X₂₀ - X'₂₀), gemäß der sich die Schäfte (21, 22) erstrecken, verteilt sind.

7. Buchsenteil (1) nach Anspruch 6, **dadurch gekennzeichnet, dass** die zylindrische Führungsfläche (192) einen Durchmesser (D) besitzt, der größer oder gleich 42 mm ist und dass die Schäfte (21, 22) jeweils einen Durchmesser (d) besitzen, der kleiner oder gleich 14 mm ist.

8. Buchsenteil (1) nach Anspruch 7, **dadurch gekennzeichnet, dass** die äußere radiale Fläche, die von den radialen Ansatzstücken (24 - 26) eingenommen ist, kleiner oder gleich 20% der zylindrischen Führungsfläche (192) ist.

9. Buchsenteil (1) nach Anspruch 8, **dadurch gekennzeichnet, dass** jedes radiale Ansatzstück (24 - 26) eine axiale Länge (1) in der Größenordnung von 6 mm und eine Dicke (e), betrachtet in einer senkrechten Ebene zur Achse (X₂₀ - X'₂₀), gemäß der sich die Schäfte (21, 22) erstrecken, besitzt, die zwischen 1,5 mm und 3 mm liegt.

10. Buchsenteil (1) nach einem der vorhergehenden Ansprüche, **dadurch gekennzeichnet, dass** die Schäfte (21, 22) von gleicher Länge sind.

11. Buchsenteil (1) nach einem der vorhergehenden Ansprüche, **dadurch gekennzeichnet, dass** das Ventil (9, 12) eine Kugel (9, 109) aufweist und dass die freien Enden (211, 221) der Schäfte (21, 22) eine konkave Kugelkalottenform aufweisen, von denen eine einen Durchmesser entsprechend dem der Kugel (9, 109) hat.

12. Buchsenteil (1) nach einem der Ansprüche 1 bis 10, **dadurch gekennzeichnet, dass** das Ventil einen Finger umfasst, der sich gemäß der Achse des Durchgangs, in dem dieses Ventil aufgenommen ist, erstreckt.

13. Buchsenteil (1) nach einem der vorhergehenden Ansprüche, **dadurch gekennzeichnet, dass** die Mittel zum Anlenken ein radiales elastisches, ringförmiges Organ (30) zum Rückstellen des Aufnahmeelements (3) in eine mittlere Anlenkposition (X₂ - X'₂) umfassen, wobei das ringförmige Organ (30) zwischen dem distalen Teil der Mutter (31) und dem Ring (32) angeordnet ist.

14. Buchsenteil (1) nach einem der vorhergehenden Ansprüche, **dadurch gekennzeichnet, dass** die distale Fläche (35B) des Rings (32) und/oder die proximale Fläche (31B) der Mutter (31) im Wesentlichen eine Kugelabschnittsform aufweisen.

15. Kupplung für die schnelle und lösbare Verbindung von zwei Leitungen (C₁, C₁₀₁), wobei die Kupplung ein Einsteckteil (101), das mit einem Ventil (109, 112) ausgerüstet ist, umfasst und die **dadurch gekennzeichnet ist, dass** sie ein Buchsenteil (1) nach einem der Ansprüche 1 bis 11 oder 13 bis 14 aufweist.

16. Kupplung nach Anspruch 15, **dadurch gekennzeichnet, dass** jedes Ventil (9, 12; 109, 112) eine Verschlusskugel (9, 109) und ein Zwischenteil (12, 112) umfasst, das zwischen der Kugel (9, 109) und einem elastischen Element (10, 110) zum Rückstellen des Ventils in die Verschlussposition angeordnet ist.

17. Kupplung für die schnelle und lösbare Verbindung von zwei Leitungen, die ein mit einem Ventil ausgerüstetes Einsteckteil umfasst, und die **dadurch gekennzeichnet ist, dass** sie ein Buchsenteil nach dem Anspruch 12 umfasst.

18. Verwendung einer Kupplung nach einem der Ansprüche 15 bis 17 für die schnelle und lösbare Unterwasserverbindung von zwei Leitungen (C₁, C₁₀₁), die geeignet sind, ein unter Hochdruck stehendes Fluid zu kanalisieren, wobei das Einsteckteil (101) und das Buchsenteil (1) ausgebildet sind, von einem Automaten betätigt zu werden.
